# EUROPEAN PATENT APPLICATION

(11) **EP 4 582 687 A1**
(43) Date of publication of application: **09.07.2025**
(21) Application number: 22931238.4
(22) Date of filing: 02.09.2022
(51) Int. Cl.: F03D 1/04

(54) **PERIPHERAL MAGNETIC LEVITATION SYSTEM**

(71) Applicant: Calle Madrid, Alfredo Raúl, Lurigancho, Lima 15 (PE)
(72) Inventor: Calle Madrid, Alfredo Raúl, Lurigancho, Lima 15 (PE)
(74) Representative: Herrero & Asociados, S.L.
(86) International application number: PCT/PE2022/050017
(87) International publication number: WO 2024/049310

(57) **Abstract**

A magnetic levitation peripheral system suitable for sustaining a peripheral support rotor by magnetic levitation; and comprising a rotating magnetic element suitable for rotating around the axial axis of the peripheral support rotor, a magnetic repulsion element suitable for maintaining the axial and radial movement of the rotor, a stabilizer element suitable for containing the radial movement of the system, and an axial flow generator suitable for power generation without the need for a transmission train; where the rotating magnetic element and the magnetic repulsion element have embedded permanent magnets arranged according to parallel planes and circular lines, in line with a pre-established arrangement, in such a way that between both elements, together with the stabilizing element, the necessary magnetic repulsion can be given to support the wind rotor of peripheral support in a stable manner.

## Description

### TECHNICAL FIELD

The present invention falls within the technical field of devices for magnetic levitation of peripheral support rotors in wind turbine systems, more specifically, it refers to a magnetic levitation peripheral system for wind turbines with peripheral support rotors.

### STATE OF THE ART

In the state of the art, patent document WO2008054248A2 is well-known, it was published on May 8, 2008, and refers to a magnetic bearing comprising a body, a shaft, a stator, and a rotor, which are placed at an operating distance from each other. The stator is configured as a hollow cylindrical permanent magnet with axially oriented magnetization. The rotor is configured as a cylindrical magnet, its axially oriented magnetization is similar to the stator magnetization, comprising two permanent magnets in the form of an annular disk, arranged to the left and right of the rotor in an air gap, the extreme faces of the left and right ring magnets are oriented towards the stator and rotor with their equal poles, the rotor is rigidly attached to the shaft; and the purpose of this antecedent is to simplify the structural design of a bearing, increase its reliability and shelf life.

In addition, there is the patent document WO2017200504A1, published on November 23, 2017, which refers to a multi-blade wind turbine without shaft having turbine blades located on the outer diameter instead of the center, this antecedent comprises at least one stator, at least one rotor, at least two turbine blades, a magnetic shell, at least one permanent magnet bar, a stator, a generator protection cover and flange, a generator side cover and a central piece of rigidity.

However, these antecedents, on the one hand, correspond to magnetic levitation bearings designed to support power shafts but not to support peripheral support wind (eolic) rotors, which makes them inapplicable for the case presented in this invention. On the other hand, said antecedents linked to wind rotors with peripheral support do not have a permanent magnets arrangement and location that allow a stable and self-adjusting magnetic levitation, but instead require external assistance based on the use of conventional bearings.

For a better understanding of the present invention, account must be taken of its specific application in wind rotors of the type that are supported by a peripheral ring, and not supported by a central axis,

### DESCRIPTION OF THE INVENTION

The definition and incorporation of the Eolic Cell and the Eolic Wall (WO2021034203, "Wind Wall") in the present description is carried out merely as part of the context necessary for the correct description of the components of the invention.

### Eolic Cell:

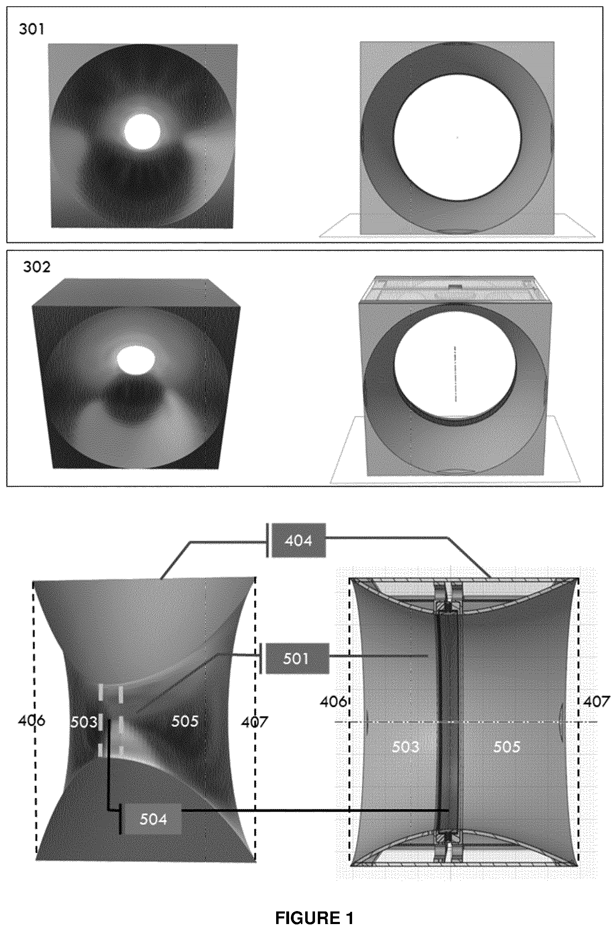

The Eolic Cell (301, 302), shown in Figure 1, should be understood as that aerodynamic and individual structure, functional in itself, capable of amplifying the wind speed, characterized by being formed by an Adjacent External Section (404), an Internal Aerodynamic Chamber (501) and a Critical Space (504); where such Critical Space (504) is that space between the Frontal Section (503) and the Rear Section (505), characterized by presenting greatest records of wind speed.

In this sense, for the present description of the invention, Critical Space (504) must be understood as the space suitable to locate the Rotor (A) of the Eolic system.

### Magnetic Levitation Peripheral System (B2):

The present invention refers to a Magnetic Levitation Peripheral System (B2) characterized by holding a peripheral support rotor by means of magnetic levitation in a stable manner through the interaction of the components of the Magnetic Levitation Peripheral System (B2) and, in addition, being comprised by:
- a Rotating Magnetic Element (B2/02) having a circular shape and rotational freedom through which the peripheral support rotor is supported by fixing the ends of its blades to the annular structure of the Rotating Magnetic Element (B2/02), the same one that is suitable for revolving around the Axial Axis (A0) of the peripheral support rotor;
- a Magnetic Repulsion Element (B2/03) which is a fixed structure with a circular shape, suitable for providing axial and radial support through magnetic repulsion to the Rotating Magnetic Element (B2/02) and, thus, maintain the magnetic levitation of the peripheral support rotor;
- a Stabilizing Element (B2/04) located around the Rotating Magnetic Element (B2/02), wherein the Stabilizing Element (B2/04) is suitable for containing the radial motion and, thereby, maintaining on its axis the magnetic levitation of the peripheral support rotor; and,
- Permanent Magnets (B2/03-M1, B2/02-M2, B2/02-M3, B2/02-M4, B2/03-M5) embedded in the Rotating Magnetic Element (B2/02) and in the Magnetic Repulsion Element (B2/03), where said Permanent Magnets are arranged according to Parallel Planes (B2/03-P1, B2/02-P2, B2/02-P3, B2/02-P4, B2/03-P5 ) and Circular Lines (B2/03-L1, B2/02-L2, B2/02-L3, B2/02-L4, B2/03-L5).

One of the main technical effects of this invention is that it maintains a stable and self-adjusting magnetic levitation and, in this way, sustains the revolutions of a peripheral support rotor with a minimum loss of angular momentum.

### BRIEF DESCRIPTION OF THE FIGURES

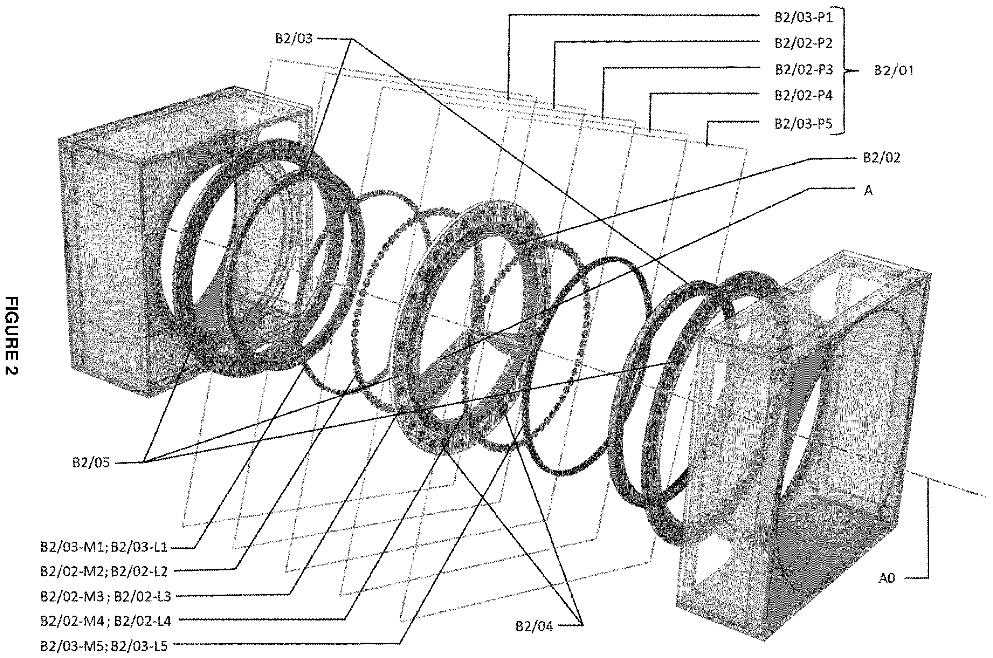

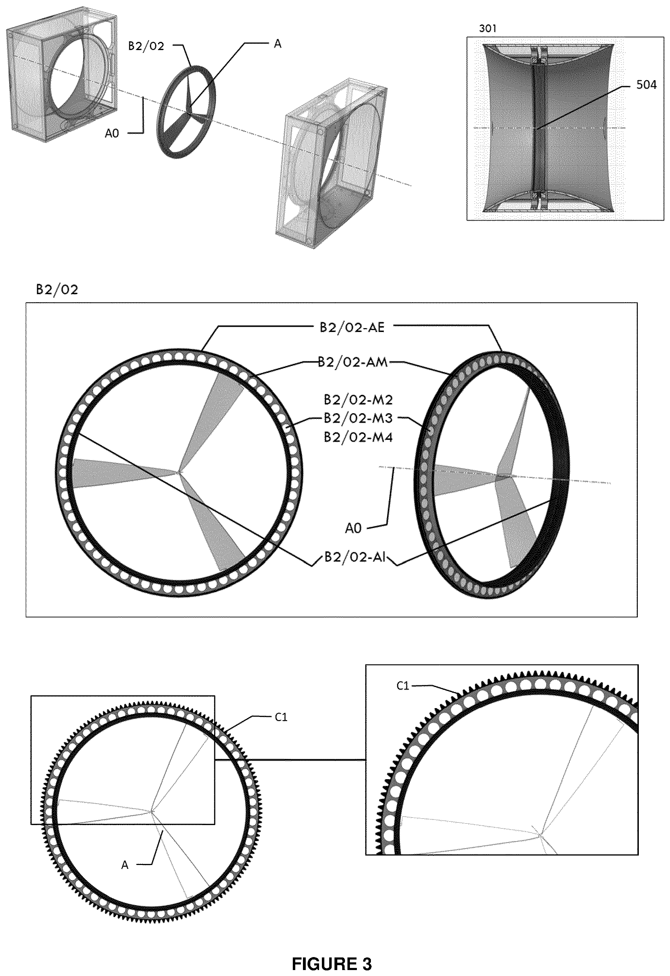

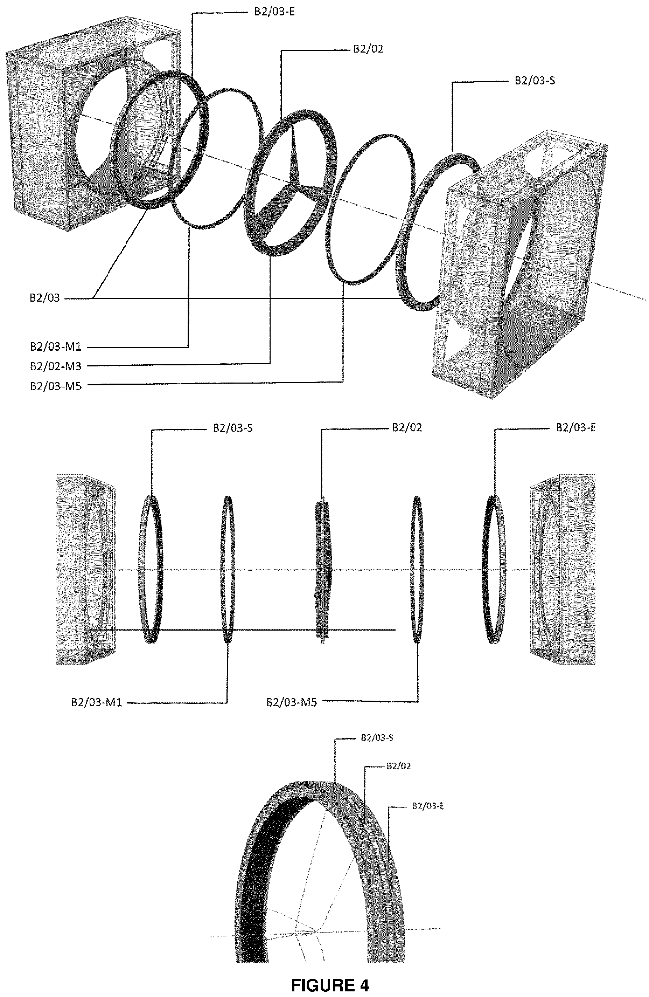

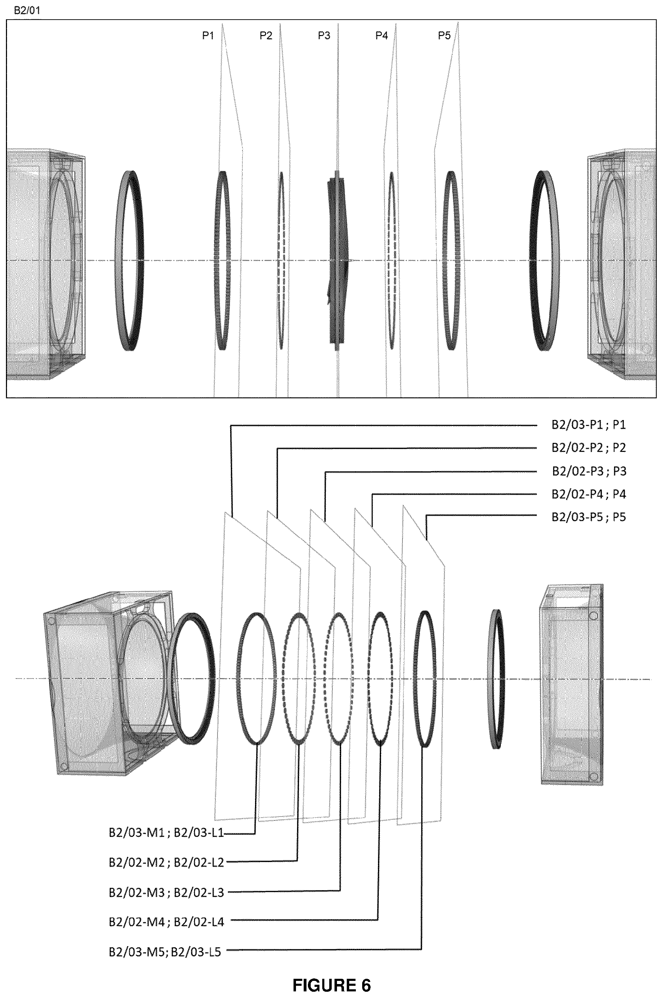

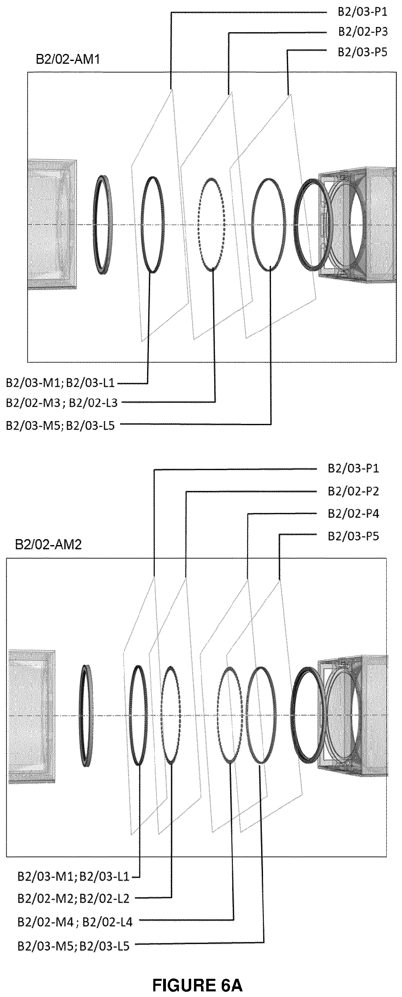

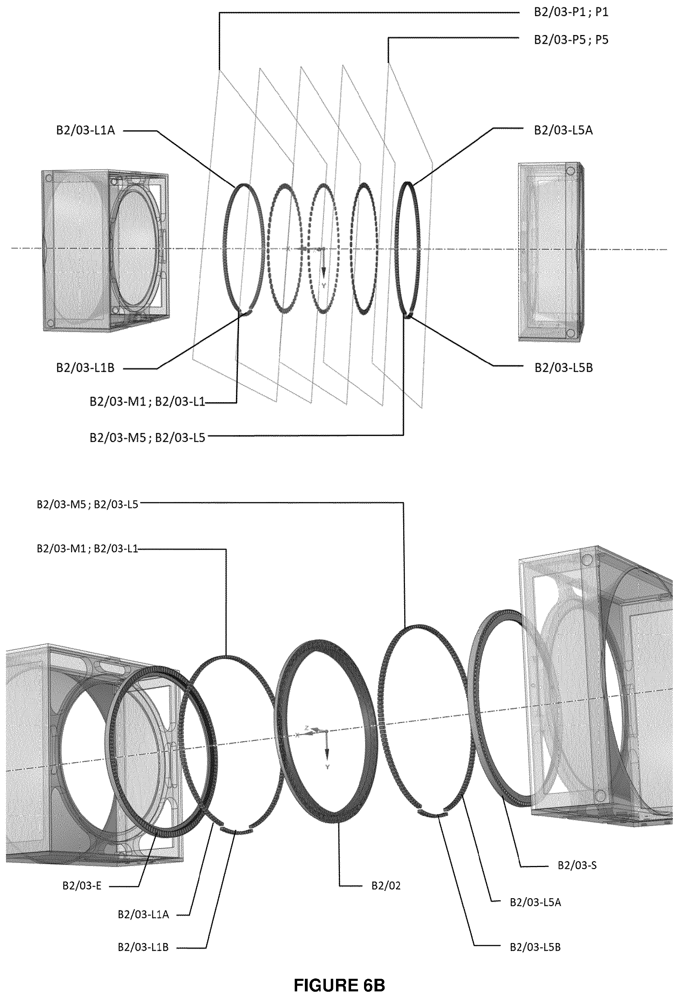

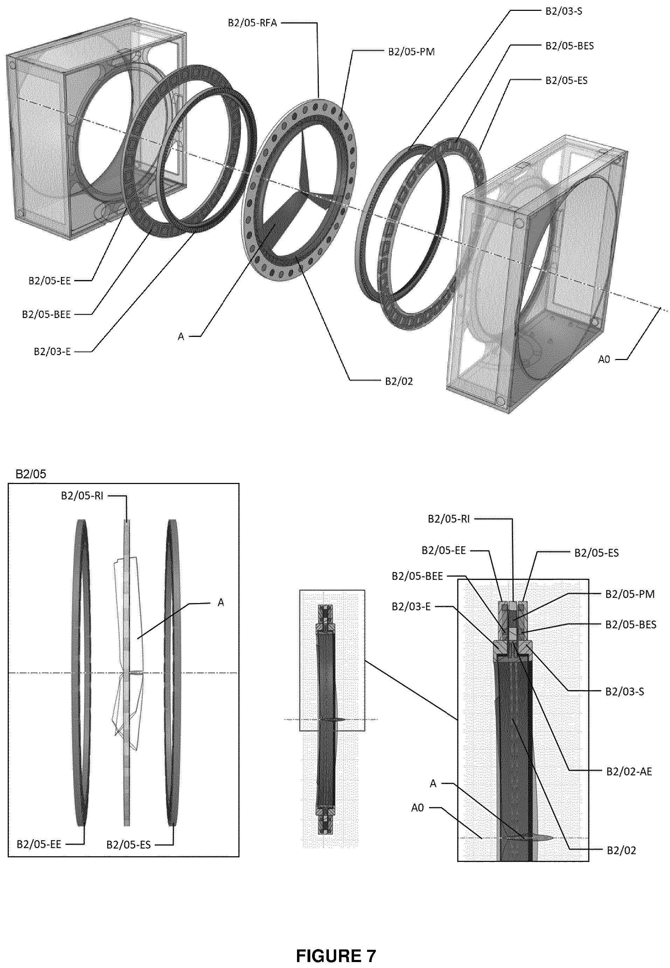

**FIGURE 1****: The Eolic Cell**
   - 301: Front view of the Eolic Cell
   - 302: Oblique view of the Eolic Cell
   - 404: Adjacent Outer Section
   - 501: Internal Aerodynamic Chamber
   - 503: Pressure Generator Space
   - 504: Critical Space
   - 505: Turbulence Suppressor Space
   - 406: Eolic Cell Inlet Opening
   - 407: Eolic Cell Outlet Opening
**FIGURE 2****: Magnetic Levitation Peripheral System (B2)**
   - A: Rotor
   - B2/01: Arrangement of Planes
   - B2/02: Rotating Magnetic Element
   - B2/03: Magnetic Repulsion Element
   - B2/04: Stabilizing Element
   - B2/05: Axial Flow Generator
   - B2/03-M1: Permanent Input Magnets of the Magnetic Repulsion Element
   - B2/02-M2: Permanent Input Magnets of the Rotating Magnetic Element
   - B2/02-M3: Permanent Input Magnets of the Rotating Magnetic Element
   - B2/02-M4: Permanent Output Magnets of the Rotating Magnetic Element
   - B2/03-M5: Permanent Output Magnets of the Magnetic Repulsion Element
   - B2/03-L1: Circular Input Line of the Magnetic Repulsion Element
   - B2/02-L2: Circular Input Lines of the Rotating Magnetic Element
   - B2/02-L3: Circular Input Lines of the Rotating Magnetic Element
   - B2/02-L4: Circular Output Lines of the Rotating Magnetic Element
   - B2/03-L5: Circular Output Line of the Magnetic Repulsion Element
   - B2/03-P1: Input Parallel Plane of the Magnetic Repulsion Element
   - B2/02-P2: Input Middle Parallel Plane of the Rotating Magnetic Element
   - B2/02-P3: Middle Parallel Plane of the Rotating Magnetic Element
   - B2/02-P4: Output Middle Parallel Plane of the Rotating Magnetic Element
   - B2/03-P5: Output Parallel Plane of the Magnetic Repulsion Element
**FIGURE 3****: Rotating Magnetic Element (B2/02)**
   301, 302 Eolic Cell
   504 Critical Space
   A Rotor
   A0 Axial Axis of the Rotor
   B2/02 Rotating Magnetic Element
   B2/02-AI Rotating Inner Ring
   B2/02-AM Rotating Magnetic Middle Ring
   B2/02-AE Rotating Outer Ring
   B2/02-M2 Permanent Input Magnets of the Rotating Magnetic Element, in the Dual Configuration scheme
   B2/02-M3 Permanent Magnets of the Rotating Magnetic Element, in the Basic Configuration scheme
   B2/02-M4 Permanent Output Magnets of the Rotating Magnetic Element, in the Dual Configuration scheme
   C1 Main Gear
**FIGURE 4****: Magnetic Repulsion Element (B2/03)**
   - B2/02: Rotating Magnetic Element
   - B2/03: Magnetic Repulsion Element
   - B2/03-M1: Permanent Magnets of the Input Section
   - B2/02-M3: Permanent Magnets of the Rotating Magnetic Element
   - B2/03-M5: Permanent Magnets of the Output Section
   - B2/03-E: Input Section of the Magnetic Repulsion Element
   - B2/03-S: Output Section of the Magnetic Repulsion Element
**FIGURE 5****: Stabilizing Element (B2/04)**
   - B2/04-AF: Damping and Braking System
   - B2/04-R: Bearings
   - B2/04-RA: Support Bearings
   - B2/04-RS: Safety Bearings
   - B2/02: Rotating Magnetic Element
   - B2/02-AE: Rotating Outer Ring
   - B2/05: Axial Flow Generator
   - B2/05-RI: Inductor Rotor
   - A: Rotor
**FIGURE 6****: Arrangement of the Planes (B2/01)**
   - B2/03-L1: Circular Input Line of the Magnetic Repulsion Element
   - B2/02-L2: Circular Input Line of the Rotating Magnetic Element
   - B2/02-L3: Circular Line of the Rotating Magnetic Element
   - B2/02-L4: Circular Output Line of the Rotating Magnetic Element
   - B2/03-L5: Circular Output Line of the Magnetic Repulsion Element
   - B2/03-M1: Permanent Input Magnets of the Magnetic Repulsion Element
   - B2/02-M2: Permanent Input Magnets of the Rotating Magnetic Element
   - B2/02-M3: Permanent Magnets of the Rotating Magnetic Element
   - B2/02-M4: Permanent Output Magnets of the Rotating Magnetic Element
   - B2/03-M5: Permanent Output Magnets of the Magnetic Repulsion Element
   - B2/03-P1: Input Parallel Plane of the Magnetic Repulsion Element
   - B2/02-P2: Input Middle Parallel Plane of the Rotating Magnetic Element
   - B2/02-P3: Middle Parallel Plane of the Rotating Magnetic Element
   - B2/02-P4: Output Middle Parallel Plane of the Rotating Magnetic Element
   - B2/03-P5: Output Parallel Plane of the Magnetic Repulsion Element
   - P1: Position 1 of Arrangement of the Planes
   - P2: Position 2 of Arrangement of the Planes
   - P3: Position 3 of Arrangement of the Planes
   - P4: Position 4 of Arrangement of the Planes
   - P5: Position 5 of Arrangement of the Planes
**FIGURE 6A****: Basic Configuration and Dual Configuration**
   - B2/02-AM1: Basic Configuration of Permanent Magnets
   - B2/02-AM2: Dual Configuration of Permanent Magnets
   - B2/03-L1: Circular Input Line of the Magnetic Repulsion Element
   - B2/02-L2: Circular Input Line of the Rotating Magnetic Element
   - B2/02-L3: Circular Line of the Rotating Magnetic Element
   - B2/02-L4: Circular Output Line of the Rotating Magnetic Element
   - B2/03-L5: Circular Output Line of the Magnetic Repulsion Element
   - B2/03-M1: Permanent Input Magnets of the Magnetic Repulsion Element
   - B2/02-M2: Permanent Input Magnets of the Rotating Magnetic Element
   - B2/02-M3: Permanent Magnets of the Rotating Magnetic Element
   - B2/02-M4: Permanent Output Magnets of the Rotating Magnetic Element
   - B2/03-M5: Permanent Output Magnets of the Repulsion Magnetic Element
   - B2/03-P1: Input Parallel Plane of the Magnetic Repulsion Element
   - B2/02-P2: Input Middle Parallel Plane of the Rotating Magnetic Element
   - B2/02-P3: Middle Parallel Plane of the Rotating Magnetic Element
   - B2/02-P4: Output Middle Parallel Plane of the Rotating Magnetic Element
   - B2/03-P5: Output Parallel Plane of the Magnetic Repulsion Element
**FIGURE 6B****: Discontinuous version with double arc in a circular line**
   - B2/02: Rotating Magnetic Element
   - B2/03-E: Input Section of the Magnetic Repulsion Element
   - B2/03-S: Output Section of the Magnetic Repulsion Element
   - B2/03-L1A: Major Arc of the Circular Input Line of the Magnetic Repulsion Element
   - B2/03-L1B: Minor Arc of the Circular Input Line of the Magnetic Repulsion Element
   - B2/03-L5A: Major Arc of the Circular Output Line of the Magnetic Repulsion Element
   - B2/03-L5B: Minor Arc of the Circular Output Line of the Magnetic Repulsion Element
   - B2/03-L1: Circular Input Line of the Magnetic Repulsion Element
   - B2/03-L5: Circular Output Line of the Magnetic Repulsion Element
   - B2/03-M1: Permanent Input Magnets of the Magnetic Repulsion Element
   - B2/03-M5: Permanent Output Magnets of the Magnetic Repulsion Element
   - B2/03-P1: Input Parallel Plane of the Magnetic Repulsion Element
   - B2/03-P5: Output Parallel Plane of the Magnetic Repulsion Element
**FIGURE 7****: Axial Flow Generator (B2/05)**
   - B2/05: Axial Flow Generator
   - B2/05-RI: Inductor Rotor
   - B2/05-EE: Input Stator
   - B2/05-ES: Output Stator
   - B2/05-PM: Permanent Magnets of the Inductor Rotor
   - B2/05-BEE: Input Stator Coils
   - B2/05-BES: Output Stator Coils
   - B2/02: Rotating Magnetic Element
   - B2/02-AE: Rotating Outer Ring
   - B2/03-E: Input Section of the Magnetic Repulsion Element
   - B2/03-S: Output Section of the Magnetic Repulsion Element
   - A: Rotor
   - A0: Axial Axis

### DETAILED DESCRIPTION OR PREFERRED EMBODIMENTS OF THE INVENTION

In more detail, according to Figure 2, the present invention refers to a Magnetic Levitation Peripheral System (B2) characterized by being a main support for a peripheral support rotor in order to facilitate its rotational movement around its axial axis, by magnetic levitation; where said Magnetic Levitation Peripheral System (B2) is composed of a Rotating Magnetic Element (B2/02) suitable for revolving around the Axial Axis (A0) of the Rotor (A), a Magnetic Repulsion Element (B2/03) suitable to serve as axial and radial magnetic support of the Rotor (A), a Stabilizing Element (B2/04) suitable to contain and stabilize the radial motion of the Rotor (A), and an Axial Flow Generator (B2/05) suitable for power generation without the need for intermediation of a power transmission train; in addition to an Arrangement of Planes (B2/01) characterized by comprising Parallel Planes (B2/03-P1, B2/02-P2, B2/02-P3, B2/02-P4, B2/03-P5) and Circular Lines (B2/03-L1, B2/02-L2, B2/02-L3, B2/02-L4, B2/03-L5) which are imaginary elements guiding the spatial location of Permanent Magnets (B2/ 03-M1, B2/02-M2, B2/02-M3, B2/02-M4, B2/03-M5) embedded inside the Rotating Magnetic Element (B2/02) and the Magnetic Repulsion Element (B2/03), respectively.

### • Rotating Magnetic Element:

The Rotating Magnetic Element (B2/02) is a circular structure located at the height of the Critical Space (504) of the Eolic Cell (301, 302) characterized by revolving around the Axial Axis (A0) and by presenting three sections: the Rotating Inner Ring (B2/02-AI), the Rotating Magnetic Middle Ring (B2/02-AM) and the Rotating Outer Ring (B2/02-AE), as shown in Figure 3.

The Rotating Inner Ring (B2/02-AI) is characterized by being the section where the Turbine (A) will be fixed to the Magnetic Levitation Peripheral System (B2), so it must be understood that the rotation speed of the Rotating Magnetic Element (B2/02) will always be in sync with the rotation speed of the Rotor (A).

The Rotating Outer Ring (B2/02-AE) is characterized as the section of the Rotating Magnetic Element (B2/02) furthest from the Axial Axis (A0), where the Inductor Rotor (B2/05-RI) of the Axial Flow Generator (B2/05) will be fixed, according to Figure 7.

Alternatively, if the Axial Flow Generator (B2/05) is not used, the Rotating Outer Ring (B2/02-AE) may be the section where a Main Gear (C1) is fixed as the driving element of a power transmission system for the purpose of transferring the angular momentum of the Rotor (A) to an electricity generator external to the system, according to Figure 3.

The Rotating Magnetic Middle Ring (B2/02-AM) is a radially extended circular section, characterized by having Permanent Magnets (B2/02-M2, B2/02-M3, B2/02-M4) embedded in its very structure, whose arrangement and location of said permanent magnets has two configurations: a Basic Configuration (B2/02-AM1) and a Dual Configuration (B2/02-AM2), as shown in Figure 6A.

### Basic Configuration:

The Basic Configuration (B2/02-AM1) is characterized by containing, in an organized and equidistant manner, a number of Permanent Magnets (B2/02-M3) embedded within its circular structure, which must be aligned to a Middle Plane (B2/02-P3) and placed around a Middle Circular Line (B2/02-L3) whose diameter must be smaller or greater, or ideally equal, to the diameter of the Circular Lines (B2/03-L1 and B2/03 -L5) of the Permanent Magnets (B2/03-M1 and B2/03-M5) located respectively in the Input Plane (B2/03-P1) and the Output Plane (B2/03-P5) of the Input Section (B2/03-E) and Output Section (B2/03-S) of the Magnetic Repulsion Element (B2/03), as shown in Figure 6A.

For all purposes, the Middle Circular Line (B2/02-L3) should be understood as a perfect circle located on the Middle Plane (B2/02-P3) and constructed by an imaginary line that crosses the midpoints (or centers of gravity ) of the Permanent Magnets (B2/02-M3) located on said Middle Circular Line (B2/02-L3). On the other hand, the direction of the magnetic polarity of the Permanent Magnets (B2/02-M3) on the Middle Circular Line (B2/02-L3) shall be the same for all the Permanent Magnets (B2/02-M3) located on the Middle Plane (B2/02-P3), in such a way that the Middle Circular Line (B2/02-L3) of the Rotating Magnetic Element (B2/02) exposes a uniform magnetic polarity direction.

### Dual Configuration:

The Dual Configuration (B2/02-AM2) is an alternative variation to the Basic Configuration (B2/02-AM1) described above, characterized by presenting two middle planes (instead of just one) parallel and equidistant to the Middle Plane (B2/ 02-P3), each with its own circular lines and containing its own permanent magnets. Thus, the Middle Plane (B2/02-P3) will be broken down into a Input Middle Plane (B2/02-P2) and a Output Middle Plane (B2/02-P4), where the Input Middle Plane ( B2/02-P2) will contain an Input Middle Circular Line (B2/02-L2) with a number of Permanent Magnets (B2/02-M2) and, correspondingly, the Output Middle Plane (B2/02-P4) will contain an Output Middle Circular Line (B2/02-L4) with a number of Permanent Magnets (B2/02-M4), where the number of Permanent Magnets (B2/02-M2 and B2/02-M4) are identical for both the Input Middle Plane (B2/02-P2) and for the Output Middle Plane (B2/02-P4), respectively. Likewise, the previous condition is maintained whereby the Input Middle Circular Line (B2/02-L2) and the Output Middle Circular Line (B2/02-L4) must be of equal diameter to each other and, at the same time, they may have a smaller or larger diameter, or ideally equal, to the diameter of the Circular Lines (B2/03-L1 and B2/03-L5) of the Permanent Magnets (B2/03-M1 and B2/03-M5) located respectively in the Input Plane (B2/03-P1) and the Output Plane (B2/03-P5) of the Input Section (B2/03-E) and the Output Section (B2/03-S) of the Magnetic Repulsion Element (B2/03), as shown in Figure 6A.

For all purposes, the Input Middle Circular Line (B2/02-L2) must be understood as a perfect circle located on the Input Middle Plane (B2/02-P2) and constructed by an imaginary line that crosses the midpoints (or centers of gravity) of the Permanent Magnets (B2/02-M2) located on such Input Middle Circular Line (B2/02-L2). On the other hand, the direction of the magnetic polarity of the Permanent Magnets (B2/02-M2) of the Input Middle Circular Line (B2/02-L2) must be the same for all the Permanent Magnets (B2/02-M2 ) located on the Input Middle Plane (B2/02-P2), in such a way that the Input Middle Circular Line (B2/02-L2) of the Rotating Magnetic Element (B2/02) exposes a uniform magnetic polarity direction.

In the same way, the Output Middle Circular Line (B2/02-L4) must be understood as a perfect circle located on the Output Middle Plane (B2/02-P4) and constructed by an imaginary line that crosses the midpoints (or centers of gravity) of the Permanent Magnets (B2/02-M4) located on such Output Middle Circular Line (B2/02-L4). On the other hand, the direction of the magnetic polarity of the Permanent Magnets (B2/02-M4) of the Output Middle Circular Line (B2/02-L4) must be the same for all the Permanent Magnets (B2/02-M4) located on the Middle Output Plane (B2/02-P4), in such a way that the Output Middle Circular Line (B2/02-L4) of the Rotating Magnetic Element (B2/02) exposes a uniform magnetic polarity direction.

### • Magnetic Repulsion Element:

The Magnetic Repulsion Element (B2/03) is characterized by being a fixed structure with a circular or annular shape, and by being composed of an Input Section (B2/03-E) and an Output Section (B2/03-S ), which together form, by using magnetic repulsion, a support medium for the Rotating Magnetic Element (B2/02), as shown in Figure 4. The Magnetic Repulsion Element (B2/03) can be held by any fixed structure or external support, where in addition the Permanent Magnets (B2/03-M1 and B2/03-M5) are embedded in said Magnetic Repulsion Element (B2/03), in such a way that the Permanent Magnets (B2/03- M1 and B2/03-M5) make magnetic opposition to the Permanent Magnets (B2/02-M2, B2/02-M3, B2/02-M4) of the Rotating Magnetic Element (B2/02).

### Input Section:

The Input Section (B2/03-E) of the Magnetic Repulsion Element (B2/03) is a fixed, circular, modular, and interchangeable structure, characterized by providing axial and radial support through magnetic repulsion to the Rotating Magnetic Element (B2/ 02). Where, according to Figure 6 and Figure 6A, the Input Section (B2/03-E) of the Magnetic Repulsion Element (B2/03) is embedded with a number of Permanent Magnets (B2/03-M1) arranged in a circular fashion on an Input Plane (B2/03-P1), parallel to the Middle Plane (B2/02-P3) of the Rotating Magnetic Element (B2/02), and located on a Input Circular Line (B2/03-L1) whose diameter can be larger or smaller, or ideally equal, to the Middle Circular Line (B2/02-L3) of the Basic Configuration (B2/02-AM1), or the Input Middle Circular Line (B2/02-L2) of the Dual Configuration (B2/02-AM2), as appropriate.

For all purposes, the Circular Input Line (B2/03-L1) includes a continuous version (basic) and a discontinuous version (advanced). Where the continuous version should be understood as a perfect circle located on the Input Plane (B2/03-P1) and built by an imaginary line that crosses the midpoints (or centers of gravity) of the Permanent Magnets (B2/03-M1) located on such Circular Input Line (B2/03-L1), according to Figure 6. On the other hand, preferably, the discontinuous version of the Circular Input Line (B2/03-L1) should be understood as two sections of arcs, circularly supplementary but with different radii, comprised of a Major Arc (B2/03-L1A) and a Minor Arc (B2/03-L1 B), both located on the Input Plane (B2/03-P1) and built by an imaginary discontinuous line that crosses the centers of gravity of the Permanent Magnets (B2/03-M1) located on the arcs of the Circular Input Line (B2/03-L1), according to Figure 6B.

Where the Major Arc (B2/03-L1A) is characterized by predominantly offering axial support to the Rotating Magnetic Element (B2/02) and by having an arc with a greater angle than the angle of the Minor Arc (B2/03-L1B) and having a radius less than the radius of the Minor Arc (B2/03-L1B). Where the Minor Arc (B2/03-L1B) is characterized by predominantly offering a vertical support (opposed to gravity) for the Rotating Magnetic Element (B2/02) and being located in the bottom of the Circular Input Line (B2 /03-L1), in addition to having an arc with an angle less than the angle of the Major Arc (B2/03-L1A) and a radius greater than the radius of the Major Arc (B2/03-L1A). It is important to indicate that, in comparison with the continuous version, this last configuration allows to substantially improve the magnetic levitation of the Rotating Magnetic Element (B2/02).

On the other hand, the direction of the magnetic polarity of the Permanent Magnets (B2/03-M1) of the Circular Input Line (B2/03-L1) must be the same for all the Permanent Magnets (B2/03-M1) located on the Input Plane (B2/03-P1), such that the Input Section (B2/03-E) of the Magnetic Repulsion Element (B2/03) exposes a uniform polarity direction. The only exception is the Permanent Magnets (B2/03-M1) located in the Minor Arc (B2/03-L1B), which may have a direction of magnetic polarity with a different angle, not greater than 90 degrees, in order to improve the vertical magnetic repulsion of the Rotating Magnetic Element (B2/02).

The arrangement of the magnetic polarity of the Permanent Magnets (B2/03-M1), located on the Circular Input Line (B2/03-L1) of the Input Plane (B2/03-P1) shall be such that the direction of magnetic polarity of the Circular Input Line (B2/03-L1) is opposite to the direction of magnetic polarity exposed by the Middle Circular Line (B2/02-L3) of the Middle Plane (B2/02-P3), or the Input Middle Circular Line B2/02-L2) of the Middle Input Plane (B2/02-P2) when applicable, so that the respective Permanent Magnets oppose equal poles and, thus, ensure an effective repulsion between the Input Section (B2/03-E) of the Magnetic Repulsion Element (B2/03) and the Rotating Magnetic Element (B2/02).

### Output Section:

The Output Section (B2/03-S) of the Magnetic Repulsion Element (B2/03) is a fixed, circular, modular, and interchangeable structure, characterized by providing axial and radial support by magnetic repulsion to the Rotating Magnetic Element (B2/ 02).

Where, according to Figure 6 and Figure 6A, the Output Section (B2/03-S) of the Magnetic Repulsion Element (B2/03) is embedded with a number of Permanent Magnets (B2/03-M5) arranged in a circular fashion on a Input Plane (B2/03-P5), parallel to the Middle Plane (B2/02-P3) of the Rotating Magnetic Element (B2/02), and located on a Circular Input Line (B2/03-L5) whose diameter can be greater or less, or ideally equal, to the Middle Circular Line (B2/02-L3) of the Basic Configuration (B2/02-AM1), or the Output Middle Circular Line (B2/02-L4) of the Dual Configuration (B2/02-AM2) as appropriate.

For all purposes, the Circular Output Line (B2/03-L5) includes a continuous version (basic) and a discontinuous version (advanced). Where the continuous version must be understood as a perfect circle located on the Output Plane (B2/03-P5) and built by an imaginary line that crosses the midpoints (or centers of gravity) of the Permanent Magnets (B2/03-M5 ) located on such Circular Output Line (B2/03-L5), as shown in Figure 6. On the other hand, preferably, the discontinuous version of the Circular Input Line (B2/03-L5) should be understood as two sections of arcs, circularly supplementary but with different radii, comprised of a Major Arc (B2/03-L5A) and a Minor Arc (B2/03-L5B), both located on the Output Plane (B2/03-P5) and built by an imaginary discontinuous line that crosses the centers of gravity of the Permanent Magnets (B2/03-M5) located on the arcs of the Circular Output Line (B2/03-L5), as seen in Figure 6B.

Where the Major Arc (B2/03-L5A) is characterized by predominantly offering axial support to the Rotating Magnetic Element (B2/02) and by having an arc with a greater angle than the angle of the Minor Arc (B2/03-L5B) and having a radius smaller than the radius of the Minor Arc (B2/03-L5B). Where the Minor Arch (B2/03-L5B) is characterized by predominantly offering a vertical support (opposed to gravity) for the Rotating Magnetic Element (B2/02) and being located in the lower part of the Circular Output Line (B2 /03-L5), in addition to having an arc with an angle less than the angle of the Major Arc (B2/03-L5A) and a radius greater than the radius of the Major Arc (B2/03-L5A). It is important to indicate that, in comparison with the continuous version, this last configuration allows to substantially improve the magnetic levitation of the Rotating Magnetic Element (B2/02).

On the other hand, the direction of the magnetic polarity of the Permanent Magnets (B2/03-M5) of the Circular Output Line (B2/03-L5) must be the same for all the Permanent Magnets (B2/03-M5) located on the Output Plane (B2/03-P5), in such a way that the Output Section (B2/03-S) of the Magnetic Repulsion Element (B2/03) exposes a uniform polarity direction. The only exception corresponds to the Permanent Magnets (B2/03-M5) located in the Minor Arc (B2/03-L5B), which may have a direction of magnetic polarity with a different angle, not greater than 90 degrees, with the purpose of improving the vertical magnetic repulsion of the Rotating Magnetic Element (B2/02).

The arrangement of the magnetic polarity of the Permanent Magnets (B2/03-M5), located on the Circular Output Line (B2/03-L5) of the Output Plane (B2/03-P5) must be such that the direction of the magnetic polarity of the Circular Output Line (B2/03-L5) is opposite to the direction of magnetic polarity exposed by the Middle Circular Line (B2/02-L3) of the Middle Plane (B2/02-P3), or the Middle Circular Output Line (B2/02-L4) of the Middle Output Plane (B2/02-P4) where appropriate, in order for the respective Permanent Magnets to oppose equal poles and, thus, ensure effective repulsion between the Output Section (B2/03-S) of the Magnetic Repulsion Element (B2/03) and the Rotating Magnetic Element (B2/02).

### • Stabilizing Element:

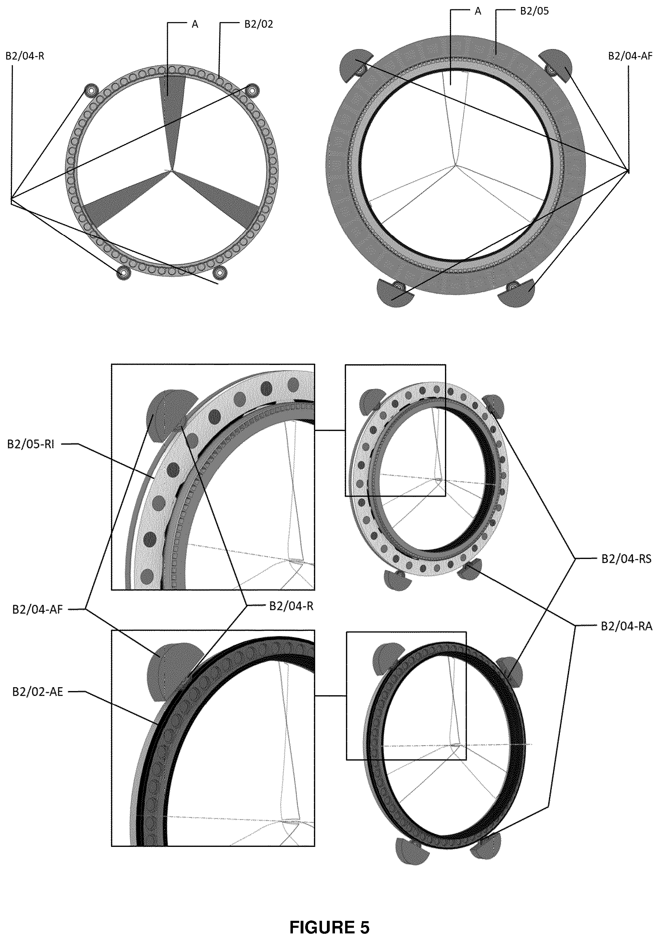

The Stabilizing Element (B2/04) comprises a Damping and Braking System (B2/04-AF), and at least two fixed Bearings (B2/04-R), of non-magnetic material (preferably, diamagnetic or paramagnetic), placed around, and in contact with, the Inductor Rotor (B2/05-RI) of the Axial Flow Generator (B2/05) or, alternatively, the Rotating Outer Ring (B2/02-AE) of the Rotating Magnetic Element (B2/02), so that the Bearings (B2/04-R) limit the radial movement of the Rotating Magnetic Element (B2/02) in order to keep the Turbine (A) levitating stably, together with the Magnetic Repulsion Element (B2/03), as shown in Figure 5. This Magnetic Repulsion Element (B2/03) preferably fixed to the physical structure of an Eolic Cell or to any other external structure.

The Damping and Braking System (B2/04-AF) is characterized by comprising hydraulic shock absorbers and friction emergency brakes coupled to the Bearings (B2/04-R) and suitable for smoothing the operation of the Magnetic Levitation Peripheral System (B2 ) in the event of sudden changes in speed, telluric movements and/or any impact or risk event that compromises the integrity of the system; where the emergency braking system is automatically activated by electronic sensors.

Bearings (B2/04-R) may be located parallel or obliquely to the plane of the Rotating Magnetic Element (B2/02) depending on the need to have the radial extension of the Rotating Magnetic Element (B2/02) cleared, such as to connect a power transmission system around the Rotating Outer Ring (B2/02-AE).

Bearings (B2/04-R) comprise Support Bearings (B2/04-RA) and Safety Bearings (B2/04-RS).

Where the Support Bearings (B2/04-RA) are characterized by maintaining contact with the Inductor Rotor (B2/05-RI) of the Axial Flow Generator (B2/05) or, alternatively, with the Rotating Outer Ring (B2 /02-AE) of the Rotating Magnetic Element (B2/02), as the case may be. Where in addition, depending on the size of the magnetic levitation force applied to counteract gravity, the Support Bearings (B2/04-RA) are characterized by being located at the top or bottom of the Inductor Rotor (B2/05-RI), or the Rotating Magnetic Element (B2/02) as the case may be.

Where the Safety Bearings (B2/04-RS) are characterized by being kept at a minimum distance from, and almost in contact with, the Inductor Rotor (B2/05-RI) or, alternatively, the Rotating Outer Ring (B2/02 -AE), as the case may be; where it is also characterized by being located in the opposite area of the Support Bearings (B2/04-RA), its main purpose being to keep the Turbine (A) in its position in the event of any unexpected radial movement that could compromise the integrity of the Magnetic Levitation Peripheral System (B2).

Alternatively, Support Bearings (B2/04-RA) may be positioned in such a way as to force the Rotating Magnetic Element (B2/02) to rise slightly so that the Rotating Magnetic Element (B2/02) stays in the area of greater vertical magnetic repulsion produced by the Magnetic Repulsion Element (B2/03).

### • Arrangement of Planes:

The Arrangement of Planes (B2/01) is characterized by being composed of Parallel Planes (B2/03-P1, B2/02-P2, B2/02-P3, B2/02-P4, B2/03-P5) and Circular Lines (B2/03-L1, B2/02-L2, B2/02-L3, B2/02-L4, B2/03-L5) which constitute imaginary elements to guide the spatial location of the Permanent Magnets ( B2/03-M1, B2/02-M2, B2/02-M3, B2/02-M4, B2/03-M5) embedded within the Rotating Magnetic Element (B2/02) and the Magnetic Repulsion Element (B2/ 03), respectively.

Parallel Planes (B2/03-P1, B2/02-P2, B2/02-P3, B2/02-P4, B2/03-P5) are characterized by being circumscribed to an Arrangement of Planes (B2/01) where the Input Plane (B2/03-P1) and the Output Plane (B2/03-P5) of the Magnetic Repulsion Element (B2/03) are located at the ends, that is, at Position 1 (P1) and Position 5 (P5) of the Arrangement of Planes (B2/01) respectively; where the Middle Plane (B2/02-P3) of the Basic Configuration (B2/02-AM1) of the Rotating Magnetic Element (B2/02) is located in the middle, that is, at Position 3 (P3) of the Arrangement of Planes (B2/01); and where the Input Middle Plane (B2/02-P2) and the Output Middle Plane (B2/02-P4) of the Dual Configuration (B2/02-AM2) of the Rotating Magnetic Element (B2/02) are located at intermediate points, that is, in Position 2 (P2) and Position 4 (P4) of the Arrangement of Planes (B2/01) respectively, as shown in Figure 6.

Circular Lines (B2/03-L1, B2/02-L2, B2/02-L3, B2/02-L4 and B2/03-L5) of the Magnetic Levitation Peripheral System (B2) are characterized by being located, each one, on a Parallel Plane (B2/03-P1, B2/02-P2, B2/02-P3, B2/02-P4 and B2/03-P5, respectively) and incorporate throughout its geometry a set of Permanent Magnets (B2/03-M1, B2/02-M2, B2/02-M3, B2/02-M4 and B2/03-M5) accordingly, as shown in Figure 6, Figure 6A and Figure 6B.

Additionally, the distance and air gap between the Parallel Planes (B2/03-P1, B2/02-P2, B2/02-P3, B2/02-P4, B2/03-P5) and the diameters of the Circular Lines (B2/03-L1, B2/02-L2, B2/02-L3, B2/02-L4, B2/03-L5) of the Magnetic Levitation Peripheral System (B2) will depend on the number, size, shape and implicit magnetic force of the Permanent Magnets (B2/03-M1, B2/02-M2, B2/02-M3, B2/02-M4, B2/03-M5), as well as the operational convenience required to maintain stable magnetic levitation and allow the Rotating Magnetic Element (B2/02) to rotate freely.

On the other hand, the number, size and shape of the Permanent Magnets (B2/03-M1, B2/02-M2, B2/02-M3, B2/02-M4 and B2/03-M5) of the Magnetic Levitation Peripheral System (B2) is not unique and general, but will be based on the following factors, without being limited to: the weight of the Rotor (A), the weight of the Rotating Magnetic Element (B2/02), the weight of the Main Gear (C1), the magnetic permeability and resistance of the materials used, the magnetic force of the Permanent Magnets (B2/03-M1, B2/02-M2, B2/02-M3, B2/02-M4, B2/ 03-M5) themselves and the aerodynamic forces generated by the Turbine (A) itself. That is, in general, Permanent Magnets (B2/03-M1, B2/02-M2, B2/02-M3, B2/02-M4, B2/03-M5) are not limited to any shape, size, or number.

It should be noted that the direction of the magnetic polarity of the Permanent Magnets (B2/03-M1, B2/02-M2, B2/02-M3, B2/02-M4, B2/03-M5) does not necessarily have to be perpendicular to their respective Parallel Planes (B2/03-P1, B2/02-P2, B2/02-P3, B2/02-P4, B2/03-P5), and may be the direction of the angular magnetic polarity, not perpendicular, as long as the pre-established opposition of the direction of the magnetic polarity between the Circular Lines (B2/03-L1, B2/02-L2, B2/02-L3, B2/02-L4, B2/03-L5) is maintained and magnetic repulsion is preserved. In this sense, under the above condition, the angle between the direction of the magnetic polarity of the Permanent Magnets (B2/03-M1, B2/02-M2, B2/02-M3, B2/02-M4, B2/03 -M5) with respect to their respective Parallel Planes (B2/03-P1, B2/02-P2, B2/02-P3, B2/02-P4, B2/03-P5), may be between 0° and 90°, inclusive, as long as the magnetic repulsion between the Circular Lines (B2/02-L2, B2/02-L3, B2/02-L4) of the Rotating Magnetic Element (B2/02) and the Circular Lines (B2/03- L1, B2/03-L5) of the Magnetic Repulsion Element (B2/03), is maintained.

### • Axial Flow Generator:

The Axial Flow Generator (B2/05) is characterized by being directly connected to the Turbine (A) through the Magnetic Levitation Peripheral System (B2), without the need for a power transmission train, and by being comprised of an Inductor Rotor (B2/05-RI), an Input Stator (B2/05-EE) and an Output Stator (B2/05-ES), as shown in Figure 7.

Where the Inductor Rotor (B2/05-RI) is a rotating component attached to the Rotating Outer Ring (B2/02-AE) of the Rotating Magnetic Element (B2/02) and embedded with a number of Permanent Magnets (B2/05-PM) in pole pairs for the generation of magnetic induction.

Where the Input Stator (B2/05-EE) is a stationary component attached to the outside of the Input Section of the Magnetic Repulsion Element (B2/03-E) and embedded with a number of Input Stator Coils (B2/05-BEE), which will be magnetically induced by the rotational movement of the Inductor Rotor (B2/05-RI) for power generation; and where said Input Stator Coils (B2/05-BEE) are coils of the type required for an axial flow generator

Where the Output Stator (B2/05-ES) is a stationary component attached to the outside of the Output Section of the Magnetic Repulsion Element (B2/03-S) and embedded with a number of Output Stator Coils (B2/05-BES), which will be magnetically induced by the rotational motion of the Inductor Rotor (B2/05-RI) for power generation; and where said Output Stator Coils (B2/05-BES) are coils of the type required for an axial flow generator.

It should be noted that, unlike the state-of-the-art axial flow generators, this Axial Flow Generator (B2/05) does not obtain its spin speed through an axis, but through a rotational peripheral support which, in turn, obtains its rotational speed as a result of the angular momentum generated by the Turbine (A).

In addition, another of the underlying technical advantages of the Axial Flow Generator (B2/05) comes from the greater number of poles that can be placed in the Inductor Rotor (B2/05-RI) because it is located on the outer ring, farthest from the Axial Axis (A0), which results in the ability to generate electricity with a lower number of revolutions per minute.

### Technical Advantages of the Invention:

The technical advantages of the present invention are summarized below:
- **Stability and magnetic balance.** Unlike the state-of-the-art alternatives that do not surpass Earnshaw's Theorem, which establishes that a set of opposite magnetic charges can be kept in a steady-state equilibrium exclusively by electrostatic or magnetic interaction, experiments carried out show that the Magnetic Levitation Peripheral System (B2) provides a stable mechanism of magnetic levitation where magnetic repulsion forces are axially and radially contained in permanent equilibrium, thanks to the interaction of two different elements (Magnetic Repulsion Element and the Rotating Magnetic Element). acting simultaneously in axial and radially complementary directions.
   In addition, the Magnetic Levitation Peripheral System (B2) is designed so that the system, overall, behaves as a single piece while maintaining its integrity without the use of external supports, bolts or fasteners. This is possible because, with the appropriate configuration, the magnetic repulsion can be exerted only on Turbine (A), while the magnetic forces between the sections of the Magnetic Repulsion Element (B2/03) can be opposite, thus the system, as a whole, is contained within an axial magnetic field that joins the external sections by means of the magnetic attraction created by the Magnetic Repulsion Element (B2/03).
- **Minimization of mechanical friction.** By applying this peripheral support system for a rotor, it is possible to reduce the mechanical friction of the entire system to the friction linked only to the small bearings of the Stabilizing Element (B2/04). Additionally, due to the arrangement of the magnets aligned according to the Arrangement of Planes (B2/01), the mechanical frictions exerted on the Stabilizing Element (B2/04) are minimized due to a magnetic repulsion force that is exerted in the opposite direction to gravity, which reduces the weight of the Rotor (A) on the Stabilizing Element (B2/04).
- **No power transmission system is required.** Because the Magnetic Levitation Peripheral System (B2) is suitable for installing an Axial Flow Generator (B2/05) on its periphery for electricity generation, then a power transmission train carrying the angular momentum of the Rotor (A) can be disregarded towards a generator external to the system, thereby eliminating mechanical losses linked to such a transmission train.
- **Increased number of poles for power generation.** Since the Axial Flow Generator (B2/05) is located at the furthest periphery of the Magnetic Levitation Peripheral System (B2), it is then suitable to accommodate a greater number of poles and coils in the Axial Flow Generator (B2/05), thus generating energy with a lower number of revolutions per minute of the Rotor (A).

The present invention is not limited to the preferred embodiments illustrated in the figures and described above in detail. Persons who are knowledgeable in the technical field should recognize that other arrangements can be devised, for example, various shapes and sizes of modules of various materials, connected to various structures and objects and each other in various ways. The invention covers all possible combinations of the different characteristics of each described embodiment. It is made clear that modifications and variations of the invention can be constructed without departing from the spirit and scope of what is protected by the specification.

## Claims

1. A magnetic levitation peripheral system **CHARACTERIZED BY** holding a peripheral support rotor by magnetic levitation stably, by interaction of components of the magnetic levitation peripheral system (B2) as a whole, where the components are as follows:
- a rotating magnetic element (B2/02) having a circular shape and rotating freedom through which the peripheral support rotor is supported by fixing the ends of its blades to the annular structure of the rotating magnetic element (B2/02), the same that is suitable for revolutionizing around the axial axis (A0) of the peripheral support rotor;
- a magnetic repulsion element (B2/03) which is a fixed structure with annular shape, suitable for providing axial and radial support by magnetic repulsion of the rotating magnetic element (B2/02) and thus maintaining the magnetic levitation of the peripheral supporting rotor;
- a stabilizing element (B2/04) located around the rotating magnetic element (B2/02), where the stabilizing element (B2/04) is suitable for containing the radial movement and, thus, maintaining the magnetic levitation of the peripheral support rotor on its axis; and,
- permanent magnets (B2/03-M1, B2/02-M2, B2/02-M3, B2/02-M4, B2/03-M5) embedded in the rotating magnetic element (B2/02) and in the magnetic repulsion element (B2/03), where the permanent magnets are arranged according to parallel planes (B2/03-P1, B2/02-P2, B2/02-P3, B2/02-P4, B2/03-P5) and circular lines (B2/03-L1, B2/02-L2, B2/02-L3, B2/02-L4, B2/03-L5).

2. The magnetic levitation peripheral system, according to claim 1, WHEREIN that parallel planes (B2/03-P1, B2/02-P2, B2/02-P3, B2/02-P4, B2/03-P5) are circumscribed to an arrangement of planes (B2/01) where an input plane (B2/03-P1) and an output plane (B2/03-P5) of the magnetic repulsion element (B2/03) are located in the extremes (P1 and P5 respectively); where a middle plane (B2/02-P3) of a basic configuration (B2/02-AM1) of the rotating magnetic element (B2/02) is located in the middle (P3); and where an input middle plane (B2/02-P2) and an output middle plane (B2/02-P4) of a dual configuration (B2/02-AM2) of the rotating magnetic element (B2/02) are located at intermediate points (P2 and P4 respectively);

3. The magnetic levitation peripheral system, according to claim 1, WHEREIN that the circular lines (B2/03-L1, B2/02-L2, B2/02-L3, B2/02-L4 and B2/03-L5) of the magnetic levitation peripheral system (B2) are each located on a parallel plane (B2/03-P1, B2/02-P2, B2/02-P3, B2/02-P4 and B2/03-P5, respectively) and incorporate along their geometry a set of permanent magnets (B2/03-M1, B2/02-M2, B2/02-M3, B2/02-M4 and B2/03-M5), accordingly.

4. The magnetic levitation peripheral system, according to claim 1, WHEREIN the distance and air gap between the parallel planes (B2/03-P1, B2/02-P2, B2/02-P3, B2/02-P4 , B2/03-P5) and the diameters of the circular lines (B2/03-L1, B2/02-L2, B2/02-L3, B2/02-L4, B2/03-L5) of the magnetic levitation peripheral system (B2) depend on the number, size, shape and implicit magnetic force of the permanent magnets (B2/03-M1, B2/02-M2, B2/02-M3, B2/02-M4, B2/03-M5), as well as the operational convenience required to keep the magnetic levitation stable and allow the rotating magnetic element (B2/02) to rotate freely; and,
where the direction of the magnetic polarity of the permanent magnets (B2/03-M1, B2/02-M2, B2/02-M3, B2/02-M4, B2/03-M5) is not necessarily perpendicular to their respective parallel planes (B2/03-P1, B2/02-P2, B2/02-P3, B2/02-P4, B2/03-P5), which may be the direction of the angular magnetic polarity, not perpendicular, as long as the preset opposition of the direction of magnetic polarity between the circular lines (B2/03-L1, B2/02-L2, B2/02-L3, B2/02-L4, B2/03-L5) is maintained and the magnetic repulsion is preserved; where, under the above condition, the angle between the direction of the magnetic polarity of permanent magnets (B2/03-M1, B2/02-M2, B2/02-M3, B2/02-M4, B2/03-M5 ) with respect to their respective parallel planes (B2/03-P1, B2/02-P2, B2/02-P3, B2/02-P4, B2/03-P5), is between 0 degrees and 90 degrees inclusive, as long as the magnetic repulsion between the circular lines (B2/02-L2, B2/02-L3, B2/02-L4) of the rotating magnetic element (B2/02) and the circular lines (B2/03-L1, B2 /03-L5) of the Magnetic Repulsion Element (B2/03), is maintained.

5. The magnetic levitation peripheral system, according to claim 1, WHEREIN the rotating magnetic element (B2/02), which is suitable for revolving around the axial axis (A0) of the rotor (A), comprises a rotating inner ring (B2/02-AI), a rotating magnetic middle ring (B2/02-AM) and a rotating outer ring (B2/02-AE);
where the rotating inner ring (B2/02-Al) is suitable for the rotor (A) to be fixed to the of magnetic levitation peripheral system (B2);
where the rotating outer ring (B2/02-AE) is suitable for fixing the inductor rotor (B2/05-RI) of an axial flow generator (B2/05); where it is also suitable for attaching a main gear (C1) of a transmission train;
where the rotating magnetic middle ring (B2/02-AM) is a radially prolonged circular section, which has permanent magnets embedded in its very structure.

6. The magnetic levitation peripheral system, according to claim 1, WHEREIN the arrangement and location of the permanent magnets embedded in the rotating magnetic middle ring (B2/02-AM) present a basic configuration;
where the basic configuration (B2/02-AM1) contains, in an organized and equidistant manner, a number of permanent magnets (B2/02-M3) embedded within its very circular structure, which are aligned to a middle plane (B2/ 02-P3) and placed around a circular middle line (B2/02-L3) whose diameter is smaller or larger, or ideally equal to, the diameter of the circular lines (B2/03-L1 and B2/03-L5) of the permanent magnets (B2/03-M1 and B2/03-M5) located respectively in the input plane (B2/03-P1) and the output plane (B2/03-P5) of the input section (B2/ 03-E) and the output section (B2/03-S) of the magnetic repulsion element (B2/03); where the middle circular line (B2/02-L3) is a perfect circle located on the middle plane (B2/02-P3) and constructed by an imaginary line passing through the centers of gravity of permanent magnets (B2/02-M3 ) located on such a middle circular line (B2/02-L3); where the direction of magnetic polarity of the permanent magnets (B2/02-M3) on the middle circular line (B2/02-L3) is the same for all the same permanent magnets (B2/02-M3) located on the middle plane (B2/02-P3), so that the rotating magnetic element (B2/02) exposes a uniform magnetic polarity direction.

7. The magnetic levitation peripheral system, according to claim 1, WHEREIN the arrangement and location of the permanent magnets embedded in the rotating magnetic middle ring (B2/02-AM) presents a dual configuration;
where the dual configuration (B2/02-AM2) presents two parallel and equidistant middle planes instead of a single middle plane (B2/02-P3); where the middle plane (B2/02-P3) is then decomposed into a middle input plane (B2/02-P2) and a middle output plane (B2/02-P4); where the middle input plane (B2/02-P2) contains a middle input circular line (B2/02-L2) with a number of permanent magnets (B2/02-M2); the middle output plane (B2/02-P4) contains a middle output circular line (B2/02-L4) with a number of permanent magnets (B2/02-M4); where the number of permanent magnets (B2/02-M2 and B2/02-M4) and the diameter of the middle input circular line (B2/02-L2) and the middle output circular line (B2/02-L4) are identical for both the middle input plane (B2/02-P2) and the middle output plane (B2/02-P4), respectively; where the middle input circular line (B2/02-L2) and the middle output circular line (B2/02-L4) must be of equal diameter to each other and, at the same time, have a smaller or larger diameter, or ideally equal to the diameter of the circular lines (B2/03-L1 and B2/03-L5) of the permanent magnets (B2/03-M1 and B2/03-M5) located respectively in the input plane (B2/03- P1) and the output plane (B2/03-P5) of the input section (B2/03-E) and the output section (B2/03-S) of the magnetic repulsion element (B2/03);
where the middle input circular line (B2/02-L2) is a perfect circle located on the middle input plane (B2/02-P2) and constructed by an imaginary line that crosses the centers of gravity of permanent magnets (B2 /02-M2) located on such a middle input circular line (B2/02-L2); where the direction of the magnetic polarity of the permanent magnets (B2/02-M2) of the middle input circular line (B2/02-L2) is the same for all the permanent magnets (B2/02-M2) located on the middle input plane (B2/02-P2);
where the middle output circular line (B2/02-L4) is a perfect circle located on the middle output plane (B2/02-P4) and constructed by an imaginary line that crosses the centers of gravity of the permanent magnets (B2 /02-M4) located on said middle output circular line (B2/02-L4); where the direction of the magnetic polarity of the permanent magnets (B2/02-M4) of the middle output circular line (B2/02-L4) is the same for all the permanent magnets (B2/02-M4) located on the middle output plane (B2/02-P4).

8. The magnetic levitation peripheral system, according to claim 1, WHEREIN the magnetic repulsion element (B2/03), comprises an input section (B2/03-E) and an output section (B2/03-S), which together make up, by using magnetic repulsion, a fixed magnetic levitation support for the rotating magnetic element (B2/02);

9. The magnetic levitation peripheral system, according to claim 1, WHEREIN the input section (B2/03-E) of the magnetic repulsion element (B2/03) is a fixed, circular, modular and interchangeable structure, embedded with a number of permanent magnets (B2/03-M1) arranged in a circular manner on an input plane (B2/03-P1), parallel to the middle plane (B2/02-P3) of the rotating magnetic element (B2/02), and located on an circular input line (B2/03-L1) whose diameter can be larger or smaller, or ideally equal, to the middle circular line (B2/02-L3) of the basic configuration (B2/02-AM1), or the input middle circular line (B2/02-L2) of the dual configuration (B2/02-AM2), as appropriate;
where the circular input line (B2/03-L1) comprises a continuous version and a discontinuous version; where the continuous version shall be understood as a perfect circle located on the input plane (B2/03-P1) and built by an imaginary line that crosses the centers of gravity of the permanent magnets (B2/03-M1) located on such circular input line (B2/03-L1);
where the discontinuous version shall be understood as two sections of arcs comprising a major arc (B2/03-L1A) and a minor arc (B2/03-L1B), both located on the input plane (B2/03-P1) and built by an imaginary discontinuous line that crosses the centers of gravity of the permanent magnets (B2/03-M1) located on the circular input line arcs (B2/03-L1);
where the major arc (B2/03-L1A) has an arc with an angle greater than the angle of the minor arc (B2/03-L1B) and has a radius less than the radius of the minor arc (B2/03-L1B);
where the minor arc (B2/03-L1B) has an arc with an angle less than the angle of the major arc (B2/03-L1A) and a radius greater than the radius of the major arc (B2/03-L1A); where, in addition, the minor arc (B2/03-L1B) is located at the bottom of the circular input line (B2/03-L1);
where the direction of the magnetic polarity of the permanent magnets (B2/03-M1) of the circular input line (B2/03-L1) shall be the same for all the permanent magnets (B2/03-M1) located on the input plane (B2/03-P1); where the only exception is permanent magnets (B2/03-M1) located in the minor arc (B2/03-L1B), which may have a magnetic polarity direction with a different angle, not greater than 90 degrees;
where the arrangement of the magnetic polarity of the permanent magnets (B2/03-M1), located on the circular input line (B2/03-L1) of the input plane (B2/03-P1) shall be such that the direction of the magnetic polarity of the circular input line (B2/03-L1) is opposite to the direction of the magnetic polarity of the middle circular line (B2/02-L3) of the middle plane (B2/02-P3), or the middle circular input line (B2/02-L2) of the middle input plane (B2/02-P2), as appropriate;

10. The magnetic levitation peripheral system, according to claim 1, WHEREIN the output section (B2/03-S) of the magnetic repulsion element (B2/03) is a fixed, circular, modular and interchangeable structure, embedded with a number of permanent magnets (B2/03-M5) arranged in a circular fashion on an output plane (B2/03-P5), parallel to the middle plane (B2/02-P3) of the rotating magnetic element (B2/02 ), and located on a circular output line (B2/03-L5) whose diameter may be greater or lesser, or ideally equal, to the middle circular line (B2/02-L3) of the basic configuration (B2/02- AM1), or the middle circular output line (B2/02-L4) of the dual configuration (B2/02-AM2), as appropriate;
where the circular output line (B2/03-L5) comprises a continuous version and a discontinuous version; where the continuous version shall be understood as a perfect circle located on the output plane (B2/03-P5) and constructed by an imaginary line that crosses the centers of gravity of the permanent magnets (B2/03-M5) located on that circular output line (B2/03-L5);
where the discontinuous version shall be understood as two arc sections comprised of a major arc (B2/03-L5A) and a minor arc (B2/03-L5B), both located on the output plane (B2/03-P5) and constructed by an imaginary discontinuous line running through the centers of gravity of the permanent magnets (B2/03-M5) located on the arcs of the circular output line (B2/03-L5);
where the major arc (B2/03-L5A) has an arc with an angle greater than the angle of the minor arc (B2/03-L5B) and has a radius less than the radius of the minor arc (B2/03-L5B);
where the minor arc (B2/03-L5B) has an arc with an angle less than the angle of the major arc (B2/03-L5A) and a radius greater than the radius of the major arc (B2/03-L5A); where the minor arc (B2/03-L5B) is located at the bottom of the circular output line (B2/03-L5);
where the direction of the magnetic polarity of the permanent magnets (B2/03-M5) of the circular output line (B2/03-L5) shall be the same for all the permanent magnets (B2/03-M5) located on the output plane (B2/03-P5); where the only exception is permanent magnets (B2/03-M5) located in the minor arc (B2/03-L5B), which may have a direction of magnetic polarity with a different angle, not greater than 90 degrees;
where the arrangement of the magnetic polarity of the permanent magnets (B2/03-M5), located on the circular output line (B2/03-L5) of the output plane (B2/03-P5) shall be such that the direction of the magnetic polarity of the circular output line (B2/03-L5) is opposite to the direction of the magnetic polarity of the circular middle line (B2/02-L3) of the middle plane (B2/02-P3), or the middle circular output line (B2/02-L4) of the middle output plane (B2/02-P4), as appropriate.

11. The magnetic levitation peripheral system, according to claim 1, WHEREIN the stabilizing element (B2/04) comprises a damping and braking system (B2/04-AF), and a system of at least two bearings (B2/04-R) fixed, made of diamagnetic or paramagnetic material, placed around the inductor rotor (B2/05-RI) of the axial flow generator (B2/05) or, alternatively, around the rotating outer ring (B2/02-AE) of the rotating magnetic element (B2/02), in such a way that the bearings (B2/04-R) limit the radial motion of the rotating magnetic element (B2/02) in order to keep the rotor (A) levitating stably;
where the damping and braking system (B2/04-AF) comprises hydraulic shock absorbers and emergency brakes coupled to the bearings (B2/04-R) and suitable for smoothing the operation of the magnetic levitation peripheral system (B2) against risk events compromising the integrity of the system, where the emergency braking system is automatically activated by electronic sensors;
where the bearings (B2/04-R) may be aligned parallel or obliquely to the plane of the rotating magnetic element (B2/02);
where the bearing system (B2/04-R) comprises supporting bearings (B2/04-RA) and safety bearings (B2/04-RS); where the supporting bearings (B2/04-RA) have contact with the inductor rotor (B2/05-RI) or, alternatively, with the rotating magnetic element (B2/02); and, depending on the applied magnetic levitation force, they are located at the bottom or top of the inductor rotor (B2/05-RI) or the rotating magnetic element (B2/02) as the case may be;
where the supporting bearings (B2/04-RA), as an option, may be positioned in such a way that they force the rotating magnetic element (B2/02) to rise slightly so that it remains in the area of greatest vertical magnetic repulsion produced by the magnetic repulsion element (B2/03);
where the safety bearings (B2/04-RS) are located at a minimum distance from, and almost in contact with, the inductor rotor (B2/05-RI) or, alternatively, the rotating outer ring (B2/02-AE) and are in the area opposite to the supporting bearings (B2/04-RA) suitable for holding the rotor (A) in its position.

12. The magnetic levitation peripheral system, according to claim 1, WHEREIN that an axial flow generator (B2/05) is directly connected to the rotor (A) through the magnetic levitation peripheral system (B2), without the need for a transmission train, and because the axial flow generator (B2/05) is comprised of an inductor rotor (B2/05-RI), an input stator (B2/05-EE) and an output stator (B2/05- 05-ES);
where the inductor rotor (B2/05-RI) is a rotating component attached to the rotating outer ring (B2/02-AE) of the rotating magnetic element (B2/02) and embedded with a number of permanent magnets (B2/05-PM ) in pole pairs for magnetic induction;
where the input stator (B2/05-EE) and the output stator (B2/05-ES) are stationary components attached and fixed to the external part of the input section (B2/03-E) and the output section (B2/03-S) of the magnetic repulsion element (B2/03), respectively; where the input stator (B2/05-EE) and output stator (B2/05-ES) have embedded a number of input stator coils (B2/05-BEE) and output stator coils (B2/05-ES). 05-BES), as appropriate, which shall be magnetically induced by the rotational movement of the inductor rotor (B2/05-RI) for power generation.
